## Europäisches Patentamt

## European Patent Office

## Office européen des brevets

(11) Numéro de publication: **0 027 081**
**A1**

(12) ## DEMANDE DE BREVET EUROPEEN

(21) Numéro de dépôt: **80401398.5**

(22) Date de dépôt: **02.10.80**

(51) Int. Cl.³: **G 01 S 13/78**

(30) Priorité: **05.10.79 FR 7924808**

(43) Date de publication de la demande: **15.04.81**
**Bulletin 81/15**

(84) Etats contractants désignés: **BE DE GB IT**

(71) Demandeur: **"LMT RADIO PROFESSIONNELLE"**,
**46-47, Quai Alphonse Le Gallo,**
**F-92103 Boulogne-Billancourt (FR)**

(72) Inventeur: **Lamine, Roger, "THOMSON-CSF" -**
**SCPI 173 Boulevard Haussmann, F-75360 Paris**
**Cedex 08 (FR)**

(74) Mandataire: **Desperrier, Jean-Louis et al,**
**"THOMSON-CSF" - SCPI 173, Bld Haussmann,**
**F-75360 Paris Cedex 08 (FR)**

(54) **Equipement de mesure de distance de type DME.**

(57) L'équipement sert à calculer la distance séparant un aéronef d'une balise de navigation.

Les temps d'arrivée des impulsions reçues en réponse à des interrogations sont mesurés par un compteur (2) numérique et enregistrés dans une mémoire vive (4). Le compteur est déclenché par un diviseur programmable (7) qui active un dispositif de commande (6) d'une horloge à quartz (3) et ce diviseur (7) est commandé par transfert de mots contenus dans un registre tampon (8) et délivrés à ce dernier par un microprocesseur (1). La première impulsion d'une paire codée synchrone des interrogations est détectée par un générateur de créneaux (12) activé par la sortie de mots égaux d'un comparateur (13) numérique et la seconde impulsion par un circuit de décodage (14), un dispositif de coïncidence et des registres tampon (10) et (11).

Applicable aux systèmes de radionavigation DME et TACAN.

## EQUIPEMENT DE MESURE DE DISTANCE DE TYPE DME

La présente invention concerne un équipement de mesure de distance du type DME servant, à bord d'un aéronef, à déterminer la distance de celui-ci par rapport à une balise de radionavigation.

Dans les systèmes de radionavigation connus sous les noms de DME ou de TACAN, l'information de distance est obtenue en mesurant le temps qui sépare des paires d'impulsions d'interrogation UHF codées émises par l'équipement de bord et des paires d'impulsions UHF codées émises en réponse par le répondeur de la balise au sol, appelé aussi transpondeur.

Les paires d'impulsions d'interrogation de l'équipement de bord sont habituellement émises à un rythme moyen de 140 par seconde pendant le temps de recherche des impulsions de réponse, puis de 30 par seconde quand les réponses ont été reconnues et que la valeur de la distance a été acquise.

La récurrence des impulsions d'interrogation est affectée de fluctuations aléatoires propres à chaque équipement de bord, dans le but de pouvoir distinguer parmi toutes les impulsions reçues à bord celles qui sont synchrones des impulsions d'interrogation.

Entre l'instant de réception d'une impulsion d'interrogation et l'instant d'émission de l'impulsion de réponse, le répondeur au sol introduit un temps de retard systématique, qui est en général de 50 microsecondes. Il fonctionne normalement avec un taux de charge constant d'environ 2700 paires d'impulsions émises par seconde.

L'équipement de bord doit donc rechercher parmi toutes celles qui sont reçues, les impulsions synchrones des impulsions d'interrogation, mesurer le temps écoulé entre les impulsions d'interrogation et les impulsions de réponse synchrones et en déduire la distance. Puisque l'aéronef se déplace, le temps écoulé varie. Il est possible de déduire de cette variation la vitesse de l'aéronef.

L'asservissement d'un créneau de poursuite sur les impulsions de réponse synchrones doit donc se faire par une loi adaptée à la vitesse de l'aéronef.

Dans un équipement antérieur on a utilisé un dispositif qui fait croître lentement un créneau de largeur variable pour effectuer la recherche des impulsions de réponse. Le début du créneau coïncide à chaque cycle d'émission avec l'instant de l'émission d'une impulsion d'interrogation. La retombée de ce créneau produit un second créneau de largeur fixe capable d'encadrer une impulsion de réponse. On examine la présence ou l'absence dans ce dernier créneau des impulsions de réponse. Si, pendant plusieurs cycles d'émission, une impulsion de réponse est trouvée, des moyens d'asservissement sont activés, qui permettent de conserver la coïncidence avec les réponses. Les moyens d'asservissement commandent également un organe d'affichage de la distance mesurée qui traduit le temps de propagation de la réponse.

Le dispositif précédent présente l'inconvénient de fournir la distance au bout d'un temps de recherche qui peut atteindre plusieurs dizaines de secondes. C'est pourquoi a été développé un autre dispositif de mesure fournissant la distance beaucoup plus rapidement, pratiquement au bout d'un temps de recherche de 1 seconde.

Ce dispositif utilise deux compteurs numériques de durée de cycle identique, cette durée correspondant à une valeur au moins égale au temps de transit des impulsions de réponse lorsque l'aéronef est à la distance maxima que l'on veut mesurer du répondeur.

Sur le premier compteur on décode les impulsions utilisées pour déclencher l'émission de l'équipement de bord et sur le second on décode un créneau capable d'encadrer une réponse à une interrogation émise.

Au début du processus de recherche les deux compteurs ont une valeur de départ telle que le créneau décodé sur le second compteur se produise 50 microsecondes après l'émission de la paire d'impulsions obtenues par décodage sur le premier compteur.

Si aucune impulsion n'est reçue pour cette valeur de retard, l'un des compteurs est arrêté, tandis que l'autre poursuit le comptage jusqu'à l'impulsion reçue suivante.

Au début du cycle suivant, les valeurs de départ des deux compteurs sont décalées, de sorte que le créneau d'encadrement des réponses se reproduit pour le retard mesuré au cycle précédent.

Le processus de décalage des valeurs de départ des deux compteurs se reproduit jusqu'à ce que, pour deux cycles consécutifs des réponses soient trouvées en coïncidence avec le créneau d'encadrement des réponses pour le même retard mesuré. Le système passe alors en régime de poursuite.

0027081

Des circuits auxiliaires utilisant des compteurs et des diviseurs permettent de mesurer l'écart entre le centre du créneau et l'impulsion de réponse à chaque cycle de fonctionnement ainsi que la variation de cet écart dans le temps. Ils permettent la génération d'impulsions supplémentaires d'horloge qui activent les deux compteurs, de sorte que le créneau d'encadrement des réponses reste centré sur ces impulsions.

Les caractéristiques de l'asservissement sont fixées par la taille des compteurs auxiliaires utilisés et les rapports de division des diviseurs qui fournissent les impulsions d'horloge nécessaires à la correction de la position temporelle du créneau d'encadrement des réponses.

La structure des compteurs est conçue pour que l'un au moins contienne à un instant déterminé la valeur de la distance mesurée selon un format et des unités intelligibles par l'utilisateur.

Des circuits auxiliaires permettent de vérifier le codage des paires d'impulsions reçues, de compter leur nombre, de vérifier que la distance mesurée n'excède pas la valeur maximum autorisée. Si les caractéristiques des réponses reçues ou si la valeur de la distance mesurée ne correspondent plus aux normes d'un signal TACAN ou DME, un nouveau processus de recherche des impulsions de réponse est déclenché.

Les deux dispositifs de mesure antérieurs qui viennent d'être décrits ne permettent pas d'adapter la durée des créneaux de poursuite des impulsions de réponse à la vitesse d'évolution de l'aéronef, ainsi qu'à la qualité du signal reçu, sans une augmentation considérable de la complexité des circuits des dispositifs.

C'est pourquoi la présente invention a pour objet un dispositif de mesure de distance présentant des caractéristiques supérieures, notamment en ce qui concerne le temps mis pour rechercher les impulsions de réponse et également en ce qui concerne l'asservissement d'un créneau d'encadrement des réponses, en fonction des évolutions de l'aéronef et du bruit superposé au signal reçu.

L'invention a pour objet un équipement de mesure de distance du type DME fournissant la distance d'un aéronef par rapport à une balise de radionavigation, et comportant un circuit de recherche et un circuit de poursuite des paires d'impulsions de réponse codées émises par le répondeur de la balise et reçues par un récepteur aéroporté associé à cet équipement et qui sont synchrones de paires d'impulsions d'interrogation codées émises par un émetteur aéroporté associé à cet équipement, dans lequel le circuit de recherche détecte les temps d'arrivée de toutes les

4 0027081

impulsions reçues à l'aide d'un compteur numérique et les enregistre dans une mémoire, le circuit de poursuite détermine à chaque instant la position temporelle des impulsions de réponse synchrones, équipement caractérisé en ce que le circuit de recherche mesure lors d'un premier cycle de recherche les temps d'arrivée de toutes les impulsions qui sont enregistrées dans une mémoire vive, en ce que le compteur numérique est déclenché avec un temps de retard donné par rapport au temps d'émission des impulsions d'interrogation, par l'intermédiaire d'un diviseur programmable activant un dispositif de commande d'une horloge à quartz, ce diviseur étant commandé par transfert de mots numériques contenus dans un premier registre tampon et délivrés à ce dernier par un circuit de calcul de type programmable, en ce que dans un second cycle de recherche, la mémoire est lue après remise à zéro du compteur avec un décalage correspondant au temps de retard donné plus le temps de codage entre les deux impulsions d'une paire d'impulsions de réponse codées selon les codes X ou Y des systèmes de radionavigation DME ou TACAN, les impulsions enregistrées en mémoire étant lues et les impulsions reçues étant présentées à l'entrée d'une porte ET qui délivre en cas de coïncidence un signal au circuit de poursuite pour qu'il valide le transfert du temps de coïncidence dans un deuxième registre tampon comme temps d'arrivée d'une première impulsion de réponse synchrone du répondeur.

Dans cet équipement pour déterminer l'arrivée d'une paire d'impulsions de réponse synchrones le circuit de poursuite est composé : d'un générateur de créneaux élaborant un créneau $\Delta t \mu s$ avant l'instant présumé d'arrivée de la première impulsion d'une paire codée de réponse suivante, ce générateur étant activé par la sortie de mots égaux d'un comparateur numérique relié aux entrées parallèles du compteur numérique et à une partie du premier registre tampon dans lequel le circuit de calcul programmable inscrit un mot numérique correspondant au temps présumé de l'arrivée de la première impulsion d'une paire d'impulsions codées de réponse du répondeur, moins le temps $\Delta t \mu s$, le créneau retombant à l'arrivée de ladite première impulsion.

Pour déterminer l'arrivée d'une seconde impulsion d'une paire d'impulsions de réponse du répondeur son circuit de poursuite se compose d'un circuit de décodage comportant une première entrée reliée à une commande de canal X, une seconde entrée à une commande du canal Y, servant à afficher le code DME ou TACAN, une troisième entrée reliée à la sortie du générateur de créneaux qui déclenche, après retombée de son créneau à l'arrivée de ladite première impulsion de réponse, l'activation d'un autre créneau par le circuit de décodage, créneau espacé par
rapport au créneau précédent et de largeur correspondant au code affiché
sur la commande du canal (X ou Y) choisi, une quatrième entrée reliée à
la sortie d'un dispositif de multiplexage qui lui délivre les impulsions
reçues au récepteur associé et remises en forme, ce circuit de décodage
délivrant à l'arrivée de la deuxième impulsion d'une paire d'impulsions
synchrones de réponse une impulsion numérique qui est enregistrée dans
un troisième registre tampon.

Les objets et caractéristiques de la présente invention apparaîtront
plus clairement à la lecture de la description suivante d'un exemple
de réalisation, ladite description étant faite en relation avec les
dessins ci-annexés dans lesquels :

la figure 1 représente des chronogrammes d'impulsions d'interrogation et de réponse émises ou reçues par un équipement de bord classique
fonctionnant selon le système DME ou TACAN ;

la figure 2 représente schématiquement un mode de réalisation des
circuits de l'équipement de mesure de distance selon l'invention ;

la figure 3 représente par des chronogrammes le fonctionnement de
l'équipement de mesure en mode : recherche des impulsions de réponse
codées et synchrones des impulsions d'interrogation ;

la figure 4 représente par des chronogrammes le mode de poursuite
des impulsions de réponse ;

la figure 5 représente en détail le circuit de synchronisation ;

la figure 6 représente des chronogrammes d'écriture et de lecture
du circuit de synchronisation ;

la figure 7 représente le schéma électrique du circuit de décodage
et la figure 8 représente son fonctionnement ;

la figure 9 représente le dispositif de commande de l'horloge de
comptage ;

la figure 10 représente par des chronogrammes le fonctionnement du
dispositif de commande de l'horloge de comptage ;

la figure 11 représente le schéma électrique du dispositif de
multiplexage ;

la figure 12 représente le schéma électrique du dispositif à
coïncidence ;

la figure 13 représente le schéma électrique du générateur de
créneaux.

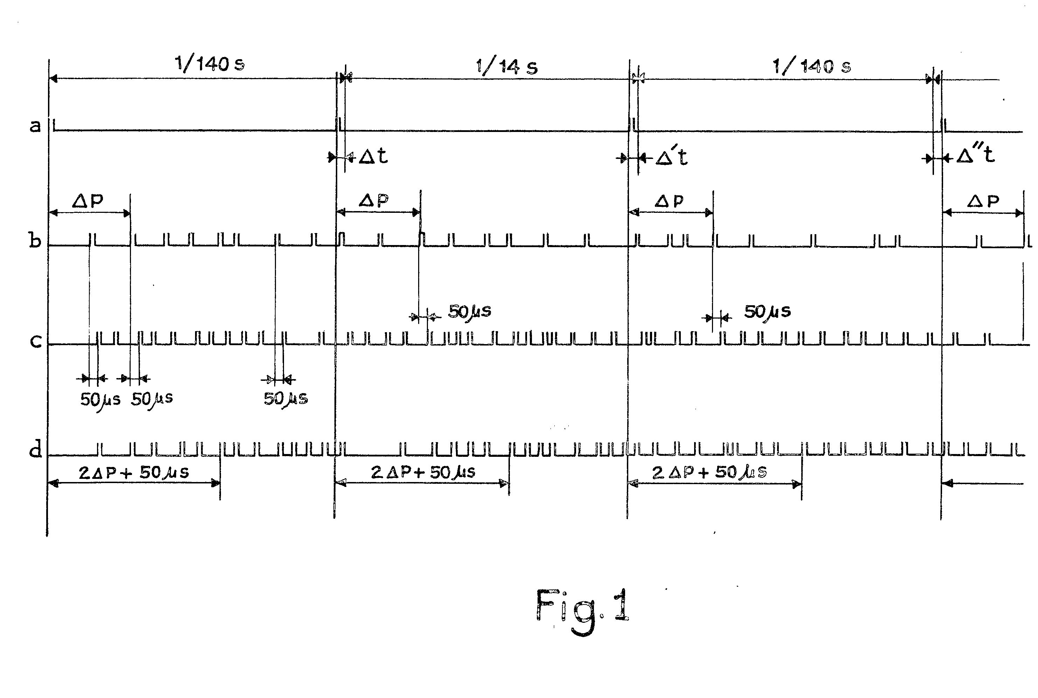

La figure 1 représente des chronogrammes des paires d'impulsions émises par l'émetteur de l'équipement de bord et d'un transpondeur au sol (non figurés). On notera tout d'abord que l'espacement entre les paires d'impulsions et le temps de traitement du transpondeur, ici égal à 50 μs, sont représentés avec une échelle dilatée pour des raisons de clarté. Dans cette figure 1 : la référence a représente les paires d'impulsions d'interrogation émises par l'émetteur de bord tous les 1/140 seconde ; la référence b représente des paires d'impulsions reçues par le transpondeur au sol ; la référence c représente des paires d'impulsions de réponse ainsi que des paires d'impulsions de remplissage émises par le transpondeur ; les paires d'impulsions de réponse sont retardées de 50 μs par rapport aux paires d'impulsions de la référence b, les paires d'impulsions de remplissage n'ont pas de lien temporel avec celles de la référence b ; la référence d représente des impulsions reçues par le récepteur de l'équipement de bord. ΔP représente le temps de propagation des impulsions de l'aéronef au transpondeur. Les paires d'impulsions de réponse sont donc reçues (2 ΔP + 50 μs) après émission des paires d'impulsions de la référence a.

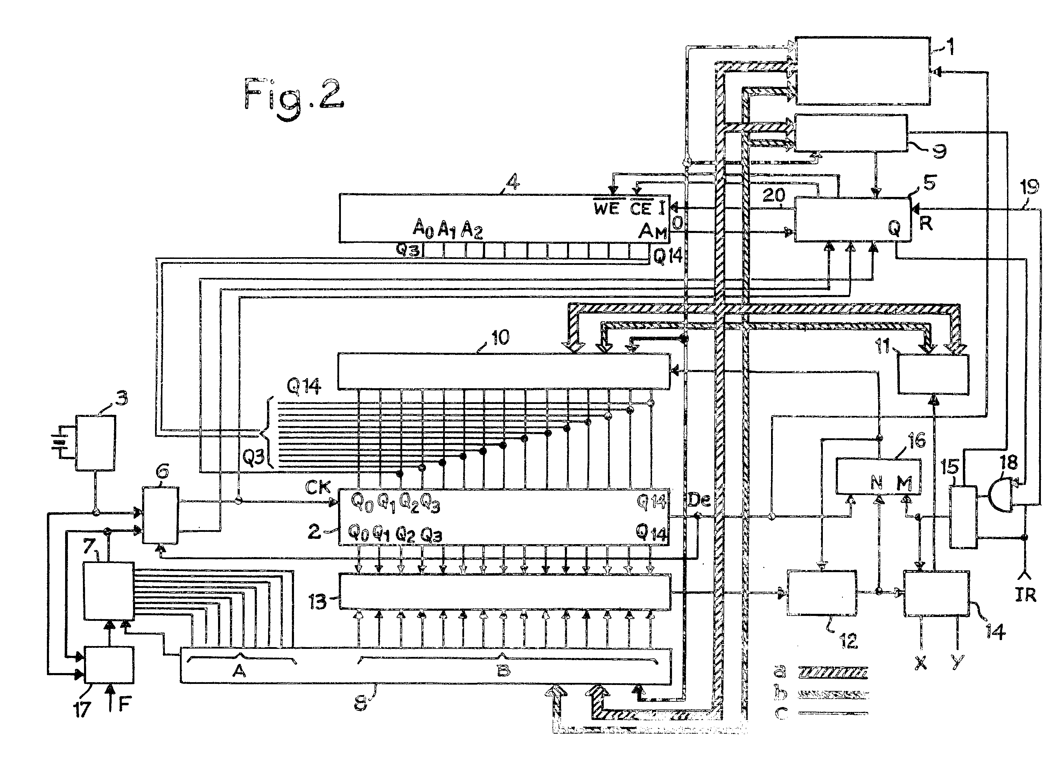

La figure 2 représente le schéma général de l'équipement de mesure de distance selon l'invention.

Sur cette figure 2 les bandes rayées les plus larges (référence a) représentent des bus d'adressage, les bandes rayées les moins larges (références b) des bus de données, et les traits continus épais (référence c) des bus de contrôle d'une unité 1 de calcul et de commande programmable.

Le temps d'arrivée des impulsions reçues au récepteur (non représenté) de l'équipement est mesuré avec un compteur 2 numérique dont la taille est en rapport avec la distance maximum à mesurer et sous la conduite d'une horloge 3 à quartz d'une fréquence adaptée à la précision de mesure demandée.

Dans le cas des systèmes appelés DME ou TACAN, la distance maximum à mesurer est d'environ 300 milles marin (555 km) et la précision de mesure demandée de l'ordre du 1/80 mille marin.

Avec un compteur 2 numérique de quinze étages binaires activé par une horloge à quartz 3, de fréquence égale par exemple à 6,47312 MHz, on pourra mesurer une distance maximale de $2^{15} \times \frac{1}{80} = 409,6$ milles marin (758,6 km), distance supérieure à celle requise de 300 milles marin, si on accepte la précision de $\frac{1}{80}$ mille marin correspondant à la période de cette horloge 3.

La période de cette horloge 3 (environ 154 nanosecondes) correspond au temps de propagation des impulsions d'interrogation de l'équipement de bord et au retour des impulsions de réponse du transpondeur sur une distance égale à $\frac{1}{80}$ mille marin entre l'équipement de bord et le transpondeur.

Avec ce compteur 2 le cycle de recherche possible est de l'ordre de 5,1 ms (millisecondes) pendant lesquelles toutes les impulsions reçues sont emmagasinées dans une mémoire 4 exclusivement réservée au cycle de recherche.

Si on voulait enregistrer dans la mémoire $2^{15}$ instants d'arrivée d'impulsions, il faudrait que sa capacité soit égale à $2^{15}$ éléments binaires (désignés par la suite par ebs) ou huit mémoires standard de 4096 x 1 ebs. Cette capacité est superflue si on considère que le synchronisme des impulsions de réponse peut être vérifié avec une précision très inférieure, au cours du cycle de recherche, à celle qui est demandée au cours du cycle de poursuite où il s'agit de fournir la distance mesurée.

En n'employant qu'une seule mémoire vive 4 de 4096 x 1 ebs on a donc la possibilité d'emmagasiner les instants d'arrivée dans 4096 tranches de temps égales chacune à 8 pas d'horloge, soit 0.154 μs x 8 = 1.232 μs, c'est-à-dire qu'au cours du cycle de recherche la précision sur la distance sera huit fois inférieure à celle qu'on pourrait effectivement atteindre avec huit mémoires à 4096 x 1 ebs.

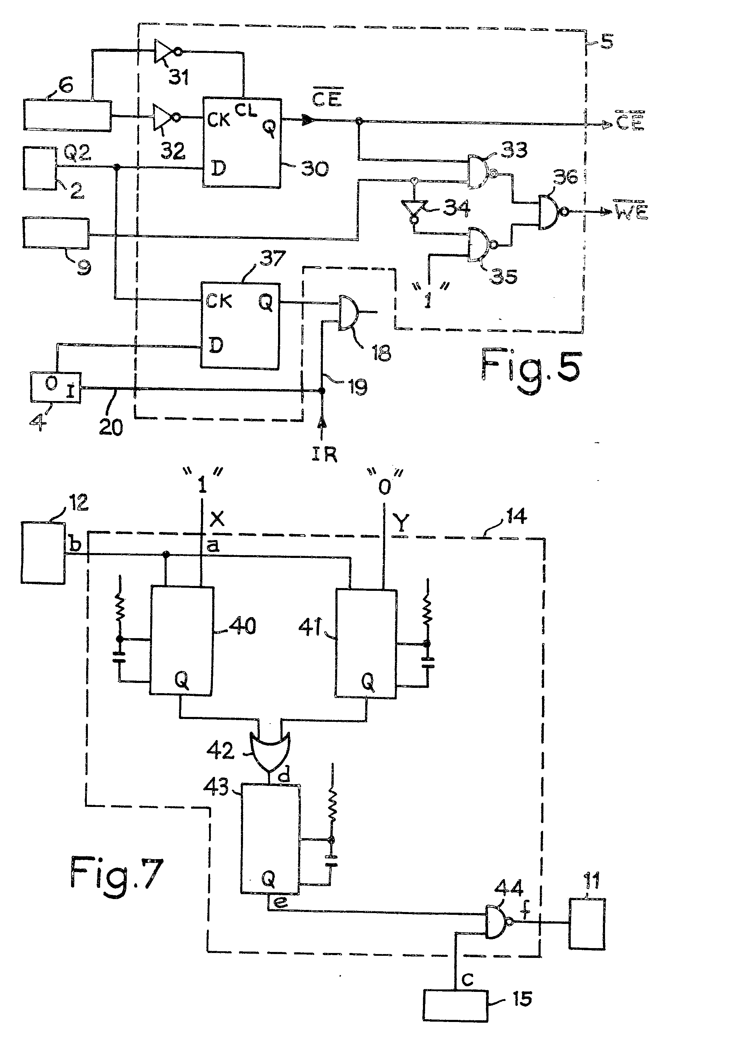

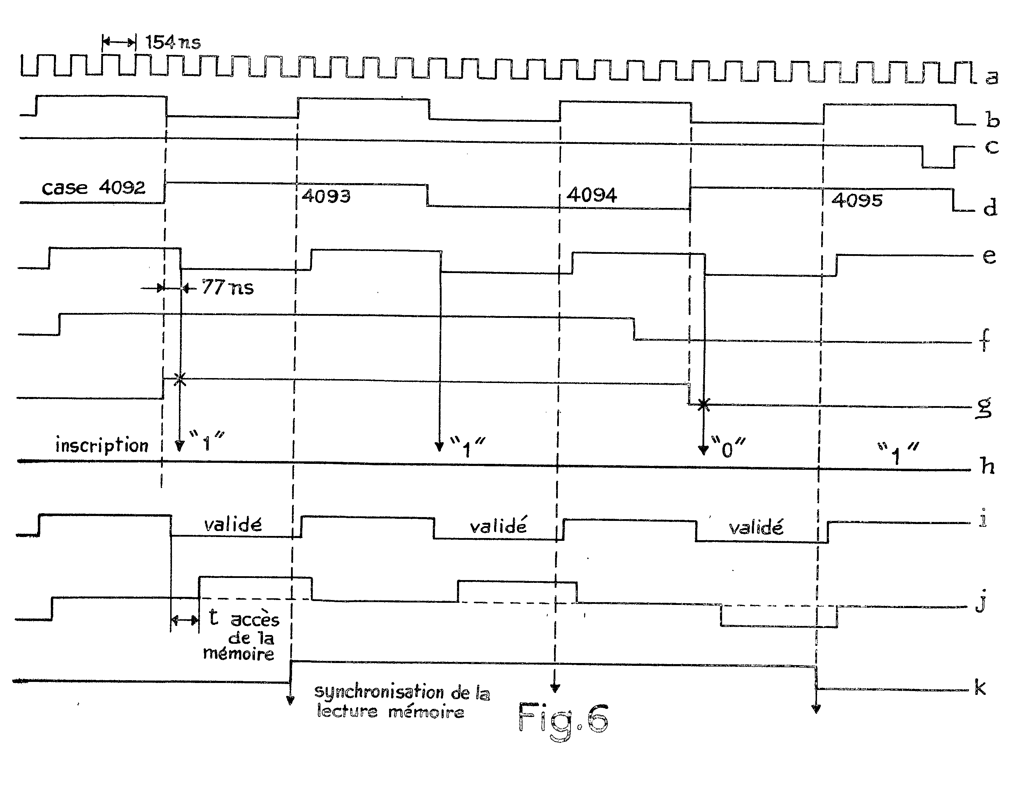

Les entrées d'adressage de cette mémoire 4 sont connectées ici aux 12 ebs de poids fort du compteur numérique 2 (Q14 à Q3), tandis que le 13ème eb (Q2) est connecté à un circuit de synchronisation 5 dont la fonction principale est de synchroniser la mémoire 4 et qui est représentée en détail par la figure 5.

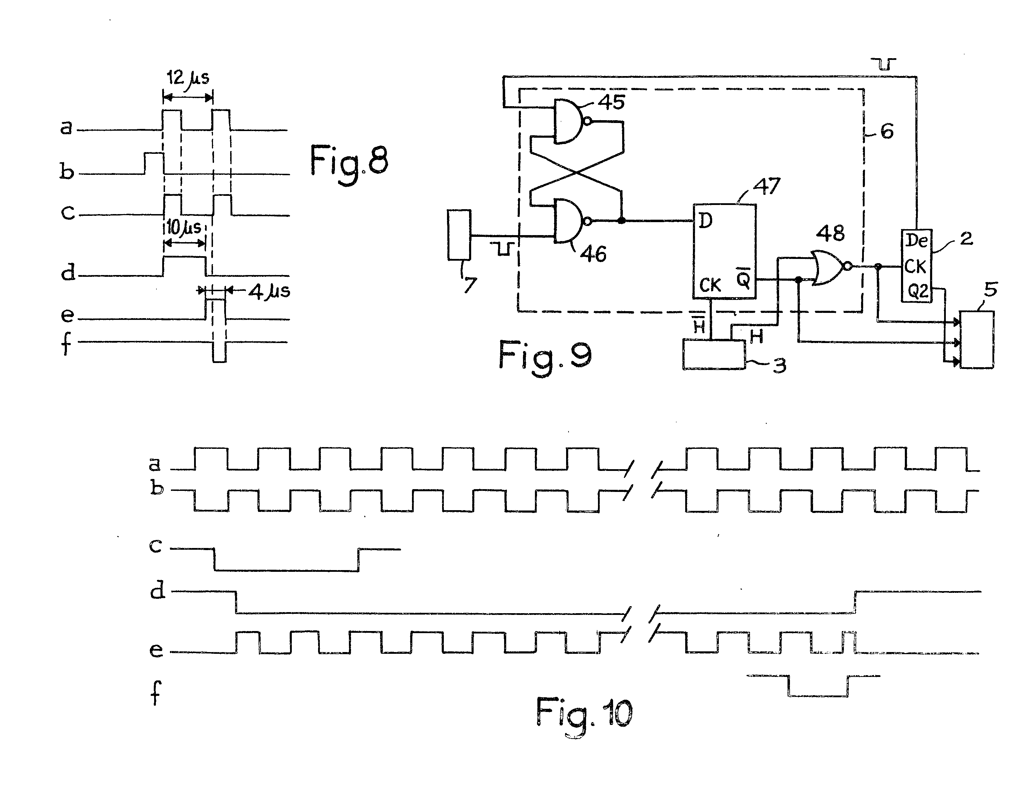

L'ordre de déclenchement du comptage des instants d'arrivée d'impulsions est donné par un dispositif de commande 6 dont la sortie est connectée à l'entrée CK du compteur numérique 2. Ce dispositif de commande 6 sera décrit plus loin en liaison avec la figure 9.

Le départ de comptage est initié par un signal d'un diviseur 7 programmable, rythmé par l'horloge 3 à quartz, et il dépend de deux facteurs. Le premier facteur est l'ordre de déclenchement du cycle de recherche donné à l'instant d'émission d'une paire d'impulsions d'interrogation codées par l'émetteur de bord et qui arrive par une ligne F.

Le second facteur est l'arrivée d'un mot numérique indiquant le temps de retard du départ de comptage par rapport à l'instant d'émission d'une paire d'impulsions d'interrogation.

Ce mot numérique est fourni par un premier registre tampon 8, et il est écrit dans la partie A de celui-ci par l'unité 1 de calcul et de commande numérique programmable.

Cette unité 1 est de préférence un microprocesseur capable de fournir par l'intermédiaire d'un circuit d'entrée-sortie 9 un ordre au circuit de synchronisation de mode lecture ou écriture de la mémoire vive 4 ainsi que de fournir des signaux de lecture à un deuxième 10 et un troisième 11 registres tampon faisant partie du circuit de poursuite décrit par la suite.

Dans une partie (schématisée par la référence B) du registre tampon 8 l'unité 1 écrit aussi un mot numérique correspondant au temps d'activation du circuit de poursuite, notamment pour activer un générateur de créneaux 12.

Dans ce but, un comparateur 13 de mots numériques a ses entrées parallèles reliées d'une part aux sorties (Q0, Q1, Q2, etc ...) du compteur 2 et d'autre part aux sorties parallèles de la partie B du registre tampon 8, ce qui lui permet de donner l'ordre d'activation au circuit de poursuite à l'instant préconisé d'un cycle de poursuite par le mot inscrit dans le registre tampon 8.

Le circuit de poursuite a pour but de déterminer avec une grande précision les instants d'arrivée des impulsions de réponse du transpondeur interrogé et qui sont synchrones des impulsions d'interrogation, ainsi que de fournir ces instants à l'unité de calcul 1 pour le calcul de la distance entre l'aéronef et le transpondeur au sol.

En plus des registres tampon 10 et 11 et du générateur de créneaux 12 déjà cités, le circuit de poursuite comprend un circuit de décodage 14 qui fabrique un créneau à la demande, un dispositif de multiplexage 15 qui reçoit sur une entrée les impulsions reçues au récepteur de l'équipement de bord et sur une autre entrée le signal de sortie d'une porte ET 18 qui détecte la coïncidence entre les impulsions reçues et les signaux enregistrés dans la mémoire vive 4 reformés par le circuit de synchronisation 5.

Un dispositif à coïncidence 16 sert d'autre part à fournir un ordre de transfert du contenu du compteur 2 pour le mémoriser dans le registre tampon 10.

9  0027081

Le mode de recherche des impulsions de réponses codées et synchrones des impulsions d'interrogation comprend deux cycles de recherche consécutifs.

Dans un premier cycle de recherche on réalise un enregistrement des instants d'arrivée des impulsions de réponse du transpondeur pendant un intervalle de temps de 5,1 ms après l'instant d'émission des impulsions d'interrogation. Cet intervalle correspond au temps de propagation, aller-retour entre l'aéronef et le transpondeur, des ondes électromagnétiques d'un aéronef distant de 758,6 km (= 409,6 MM).

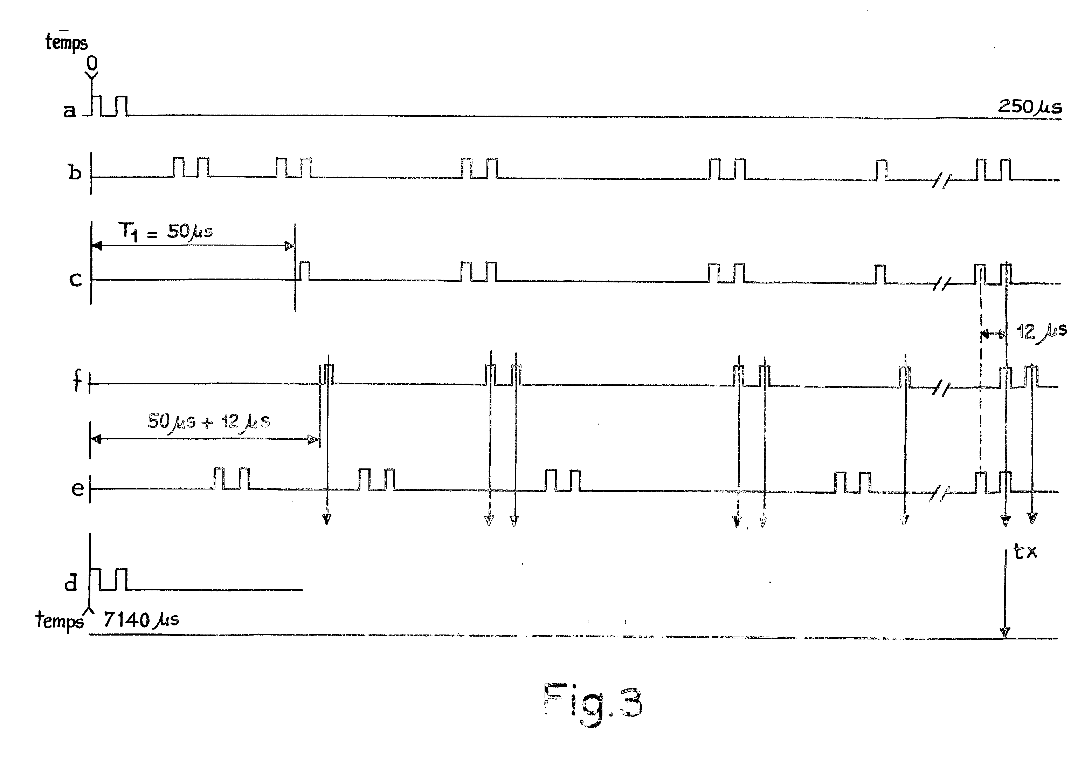

Sur la figure 3 la référence a représente une paire d'impulsions d'interrogation émises par l'émetteur de l'équipement de bord à l'instant initial du premier cycle de recherche. Le générateur utilisé dans ce cas peut être d'un type connu.

La référence b représente les impulsions de réponse et le bruit reçus. Ces impulsions sont remises au récepteur (non décrit) de l'équipement de bord, en forme carrée par des moyens usuels connus. Pour rendre le diagramme plus clair, celui-ci ne représente que les impulsions reçues pendant environ 250 µs sur les 5100 ms que comporte le premier cycle de recherche.

Dans les systèmes TACAN ou DME l'émetteur de bord émet normalement 140 impulsions d'interrogation par seconde, soit une paire toutes les $\frac{1000 \text{ ms}}{140}$ = 7,14 ms avec des fluctuations : $\Delta t$, $\Delta' t$, $\Delta'' t$, représentées sur la figure 1, propres à chaque équipement de bord d'un aéronef.

La référence c représente les impulsions prises en compte par l'équipement de bord, soit les mêmes impulsions que la référence b, à l'exception de celles qui suivent les impulsions de la référence a dans la tranche de temps T1 = 50 µs d'émission des impulsions de réponse du transpondeur après l'arrivée des impulsions d'interrogation à celui-ci.

L'ordre de déclenchement du premier cycle de recherche est déterminé par un dispositif de commande 17 à l'instant d'émission de la première impulsion d'une paire d'impulsions d'interrogation. Cet ordre arrive à l'entrée du diviseur programmable 7 qui produit une impulsion de sortie après 324 pas d'horloge à 6,47312 MHz soit après $\frac{1}{6,47312.10^{-6}} \times 324 = 50,0540^{-6}$ s. T1 est donc très voisin de 50 microsecondes.

Le dispositif de commande 6 du compteur 2 délivre alors à sa sortie un signal qui déclenche le début de comptage du temps d'arrivée de la première impulsion de réponse. Tous les 8 pas d'horloge ou 1,2 µs il adresse successivement une autre case de la mémoire vive 4 pouvant mémoriser 4096 éléments binaires.

Un élément 1 ou 0 est inscrit dans chaque case de mémoire 4, selon qu'une impulsion de réponse a été reçue ou non, en coïncidence avec l'état du compteur 2 qui correspond à l'adressage de la case mémoire. La synchronisation de l'élément binaire d'adresse et de l'élément binaire d'impulsion est effectuée par le circuit de synchronisation 5.

L'unité 1 de commande et de calcul fournit dans ce cycle de recherche l'ordre de mode écriture à la mémoire 4 par l'intermédiaire du circuit d'entrée-sortie 9. C'est elle qui envoie dans la partie A du registre tampon 8 un mot de positionnement du diviseur 7 programmable tel que ce dernier fournisse le retard T1.

Cette unité 1 est également utilisée pour fournir au générateur de créneaux 12 un ordre d'activation dès que le compteur 2 passe par le contenu 0. Ceci est obtenu par l'inscription d'un mot numérique de valeur zéro dans la partie B du registre tampon 8 qui est reliée au comparateur 13 de mots numériques.

Le contenu de la mémoire 4 représente donc l'absence ou la présence des impulsions reçues dans chacune des 4096 tranches de temps égales à 8 pas d'horloge ou 1,2 µs qui séparent l'activation du compteur de son débordement 5,1 ms après émission des interrogations.

Le dispositif de commande 6 retarde également la sortie débordement de 1 pas d'horloge de sorte que le compteur s'arrête au contenu 0 et soit prêt pour le deuxième cycle de recherche représenté par les références d à f sur la figure 3.

Sur le chronogramme d de la figure 3 on n'a pas tenu compte des fluctuations $\Delta t$, $\Delta t'$, $\Delta t''$, etc... Celui-ci reproduit le chronogramme a, et l'instant d'émission de la seconde paire d'impulsions est par conséquent situé 7140 µs après la première paire d'impulsions.

On suppose que des impulsions de réponse du transpondeur et de bruit sont reçues par l'équipement de bord à partir de ces 7140 µs. Elles sont représentées par le chronogramme e de la figure 3.

On recherche maitenant les impulsions de réponse qui sont synchrones des impulsions d'interrogarion. C'est pourquoi le compteur 2 est réactivé après un temps mort de 50 µs + 12 µs et la mémoire 4 est lue 7140 µs + 12 µs, soit 7152 µs, après l'inscription en mémoire des impulsions de réponse représentées par le chronogramme c de la figure 3.

Le temps de 12 µs imposé ici correspond à l'intervalle de temps de codage habituel dans les systèmes DME et TACAN mode X entre fronts avant des deux impulsions d'une paire codée. Dans les systèmes DME et TACAN en mode Y l'intervalle imposé serait de 30 µs. Il se produit donc un décalage de 12 µs à la lecture de toutes les impulsions enregistrées (chronogramme f de la figure 3).

On observera au bout d'un laps de temps plus ou moins long, l'apparition d'une coïncidence entre une première impulsion d'une paire de réponse enregistrée au premier cycle et une seconde impulsion de réponse d'une paire reçue au second cycle.

Seules les paires d'impulsions de réponse synchrones des impulsions d'interrogation respectant dans ce cas le codage de 12 µs peuvent produire des coïncidences au cours des deux cycles de recherche consécutifs.

Sur la figure 3 le temps de coïncidence est représenté par tx.

Les impulsions vidéo remises en forme dans le récepteur de l'équipement de bord se présentent sur la ligne 19 à l'entrée du circuit de synchronisation 5 et de la porte ET 18 qui est mise en relation avec la mémoire 4 par le circuit 5.

Si une coïncidence se produit à l'entrée de la porte ET 18 entre éléments binaires en mémoire 4 et éléments binaires correspondant aux impulsions reçues, le dispositif de multiplexage 15 délivre un élément binaire à une première entrée M du dispositif à coïncidence 16. Le générateur de créneaux 12 est relié à la sortie du comparateur 13 et il fournit un élément binaire à la deuxième entrée N du dispositif à coïncidence 16, dès que le compteur 2 passe par le contenu 0, soit au début du 2ème cycle de recherche.

Quand les conditions aux entrées du dispositif 16 sont remplies, celui-ci envoie un ordre de validation pour transférer la valeur instantanée, contenue dans le compteur 2, dans le registre tampon 10, ce qui mémorise l'arrivée de l'impulsion de réponse synchrone des impulsions d'interrogation.

Si aucune impulsion de réponse n'est trouvée dans l'intervalle de 5,1 ms qui suit l'émission des impulsions d'interrogation, la sortie débordement De du compteur 2 délivre au dispositif de coïncidence 16 un signal binaire de valeur telle que la sortie du dispositif 16 fournisse un ordre de validation au registre tampon 10 pour le transfert et l'enregistrement du contenu maximum du compteur 2.

En même temps, cet ordre arrive à l'entrée du générateur de créneaux 12, ce qui déclenche la retombée du créneau établie précédemment.

La valeur enregistrée dans le registre tampon 10 constitue dans ce cas l'indication de l'absence de réponse au cours des deux cycles de recherche décrits.

Au cours de ce deuxième cycle de recherche, l'unité 1 de calcul et de commande fournit le mode lecture à la mémoire vive 4 par l'intermédiaire du circuit d'entrée-sortie 9 et du circuit de synchronisation 5.

L'unité 1 délivre aussi au registre tampon 8 un mot tel que le diviseur 7 programmable fournisse un ordre de départ au dispositif 6 de commande avec un retard de 62 μs par rapport au temps d'émission de la deuxième paire d'impulsions d'interrogation, mot qui sert aussi à fournir au générateur 12 l'ordre d'activation d'un créneau après 62 μs.

Si au bout du deuxième cycle aucune impulsion de réponse codée n'est trouvée, un nouveau processus en deux cycles est déclenché. Dans le cas contraire où une réponse a été trouvée au deuxième cycle de recherche, le processus suivant consiste en un cycle de poursuite des réponses synchrones des impulsions d'interrogation qui est commandé par l'unité 1 de commande et de calcul.

Cette unité accède à la valeur du temps de réponse aux impulsions d'interrogation, valeur mesurée sur une paire d'impulsions codées synchrones au cours des deux cycles précédents et qui est enregistrée dans le registre tampon 10.

Cette valeur est connue avec une incertitude de 8 pas d'horloge, car comme il a été dit la mémoire 4 a une capacité de stockage de données qui a été choisie, pour raison d'économie, 8 fois inférieure au contenu maximum du compteur 2.

Comme le cycle de fonctionnement du compteur 2 est de 5,1 ms et l'intervalle entre deux cycles d'interrogarion, égal à environ 7,1 ms, il reste environ 2 ms pour effectuer des calculs avec l'unité 1 de calcul et de commande.

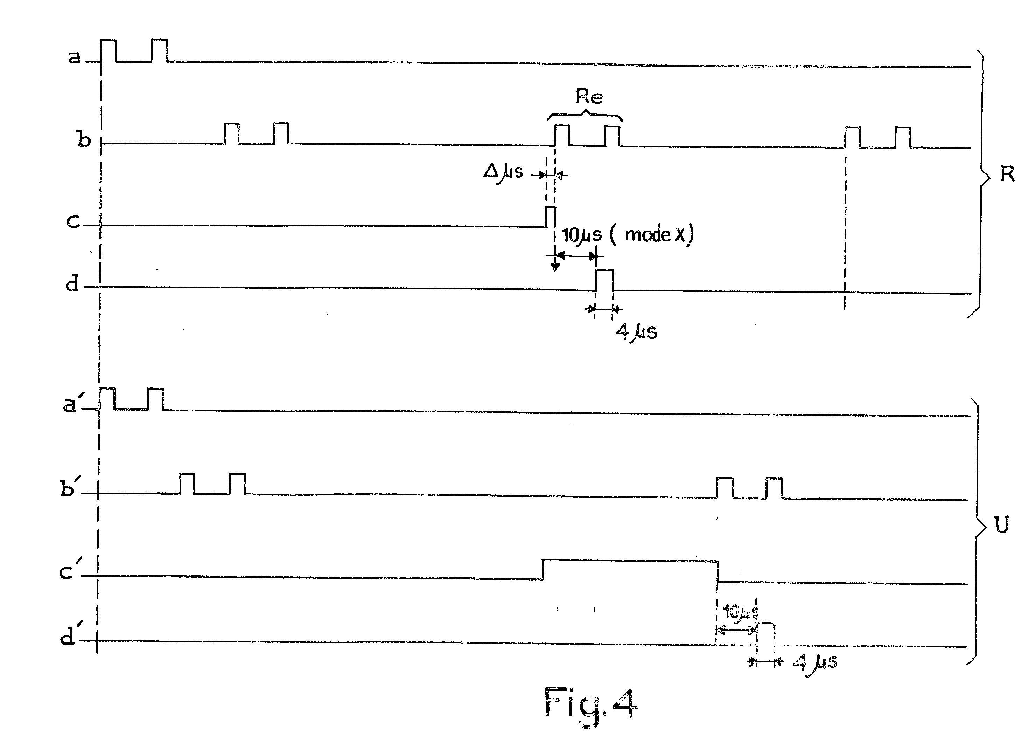

A partir des informations stockées dans le registre tampon 10, l'unité 1 calcule l'instant d'activation du compteur 2, ainsi que celui du générateur de créneaux 12 en inscrivant un mot dans le registre tampon 8 pour que ce dernier soit activé Δ μs avant l'instant présumé d'arrivée de la première impulsion de réponse (figure 4(b)), reçue après émission des impulsions codées d'interrogation représentées à la figure 4(a) (cycle de réponse : R).

Δ μs sera égale par exemple à 2 μs si l'on désire une tolérance de ± 2 μs sur l'instant de synchronisation de la réponse. La valeur correspondante du compteur 2 est enregistrée dans le registre tampon 10.

Dès qu'une première impulsion d'une paire codée, désignée par Re sur la figure 4(b), est reçue, le générateur de créneaux 12 est désactivé (figure 4(c)) et il fournit alors un signal d'activation au circuit de décodage 14.

A son tour ce circuit 14 fournit un créneau d'encadrement de 4 μs (figure 4(d)) et cela avec un retard, par rapport à l'activation précédente du générateur 12, centré sur la valeur de 12 μs en mode X (ou de 30 μs en mode Y).

Si une deuxième impulsion d'une paire codée est présente dans ce dernier créneau un élément binaire 1 est enregistré dans le registre tampon 11. L'état de ce registre 11 indique la présence de cette deuxième impulsion à l'unité 1 de calcul. Le temps d'arrivée de la première impulsion étant inscrit dans le registre tampon 10, l'unité de calcul 1 est alors capable à partir des informations précédentes de déduire la distance instantanée existant entre l'aéronef et le transpondeur.

Le créneau du générateur 12 ne retombe que lorsqu'une impulsion est reçue (figure 4(c)) grâce à sa liaison avec la sortie du dispositif 16 à coïncidence.

La position du créneau d'encadrement des impulsions de réponse est calculée par l'unité de calcul 1 à partir de la distance calculée à chaque pas de calcul avec la précision souhaitée. Si l'on désire par exemple une tolérance de ± 2 μs sur la détermination du synchronisme de la réponse, le créneau sera activé 2 μs avant l'instant calculé pour la réception de cette impulsion de réponse.

Si la valeur enregistrée pour la réponse est hors tolérance, cette valeur n'est pas utilisée pour le calcul précédent et celui-ci est effectué en admettant que l'erreur est nulle pour le pas de calcul correspondant.

On explique maintenant à l'aide du cycle U des figures 4(a') à 4(d') plus particulièrement le fonctionnement du générateur 12 de créneaux et du circuit 14 de décodage lorsque se présentent des impulsions codées qui ne sont pas synchrones des impulsions d'interrogation.

On suppose que la seconde paire d'impulsions d'interrogation (figure 4(a')) est émise 7140 ms après la première paire représentée par la figure 4(a) et que l'équipement recherche parmi les impulsions reçues les impulsions de réponse synchrones.

L'unité 1 de calcul a calculé depuis l'enregistrement de la paire de réponses synchrones reçues (figure 4(b)) la position présumée de la paire suivante.

Comme précédemment, il active le générateur 12 de créneaux 2 µs avant l'apparition présumée de la première impulsion de réponse. Celle-ci n'étant pas reçue (figure 4(c')) le créneau ne retombera qu'à l'arrivée de la première impulsion de remplissage ou autre qui se présente et qui sera enregistrée dans le registre tampon 10.

A la retombée de ce créneau, le générateur 12 envoie au circuit de décodage 14 un signal d'activation d'un créneau de décodage 10 µs plus tard.

Si une seconde impulsion est comprise dans ce dernier créneau elle est enregistrée dans le registre tampon 11.

L'unité 1 calcule alors la distance à partir de cette paire puis la compare à la distance trouvée pour la première paire d'impulsions synchrones (figure 4(b)).

Elle ne tiendra pas compte de la valeur de la distance dans le pas de calcul suivant si cette valeur est hors de la tolérance de la distance trouvée pour la première paire, cette tolérance étant fixée a priori par programmation.

Le circuit de décodage 14 précédent est uniquement prévu pour réaliser des simplifications de circuit.

On pourrait en effet utiliser la mémoire vive 4 pour produire un créneau à l'instant où le compteur 2 passe par une valeur donnée et par suite pour positionner un créneau à l'instant présumé d'arrivée de la deuxième impulsion d'une paire de réponses. Mais il serait nécessaire dans ce cas que l'unité de commande 1 puisse écrire dans n'importe quelle case de la mémoire vive 4, ce qui nécessiterait un multiplexage des entrées d'adresse et de données de cette mémoire 4 utilisée tantôt avec le compteur 2 tantôt avec le circuit de commande ; la position du créneau serait de plus affectée d'une erreur maximum de 1,2 µs si la mémoire utilisée est de 4096 x 1 ebs, ce qui impliquerait une correction des calculs effectués par l'unité de calcul 1.

Cette façon de créer un second créneau nécessiterait un circuit plus compliqué et donc plus coûteux que le circuit de décodage 14 prévu.

On va maintenant décrire les modes de réalisation préférés des principaux dispositifs de l'équipement de mesure selon l'invention.

La figure 5 représente en détail le circuit de synchronisation 5. Dans celui-ci, une bascule 30 de type D reçoit par l'intermédiaire d'un inverseur 31 sur une première entrée CL le signal d'autorisation de comptage envoyé par le dispositif de commande 6 de l'horloge de comptage. Une seconde entrée CK de la bascule 30 est reliée également par un autre inverseur 32 à la sortie du dispositif de commande 6. Une troisième entrée D de la bascule 30 est reliée à la sortie Q2 du compteur 2 numérique. La sortie Q de la bascule 30 fournit une impulsion de validation $\overline{CE}$ pour une entrée correspondante de la case mémoire 4 à chaque lecture ou chaque écriture dans cette case. L'impulsion $\overline{CE}$ est aussi reçue à une première entrée d'une porte 33 ET-NON comportant une seconde entrée recevant un signal de mode de lecture ou d'écriture en mémoire 4 provenant du circuit 9 d'entrée-sortie relié à l'unité 1 de calcul. Cet ordre est également transmis à un inverseur 34 relié à la première entrée d'une deuxième porte 35 ET-NON dont la seconde entrée est portée au niveau logique 1.

La sortie de la porte 35 ET-NON est reliée à une première entrée d'une troisième porte 36 ET-NON et la sortie de la porte 33 ET-NON est reliée à la seconde entrée de cette troisième porte 36 ET-NON, de façon à fournir, en sortie de cette dernière porte un signal d'écriture ou de lecture $\overline{WE}$ à une entrée correspondante de la mémoire 4.

D'autre part le circuit 5 comprend une bascule 37 de type D avec une entrée CK reliée à la sortie Q2 du compteur 2, une entrée D reliée à la sortie O des données de la mémoire 4 et une sortie Q reliée à une entrée de la porte ET 18.

Les impulsions IR reçues à l'entrée du circuit 5 sont transmises sur un fil 20 directement à l'entrée I des données de la mémoire 4.

Le circuit de synchronisation 5 ne produit pas seulement les signaux de sélection, de lecture et d'écriture dans la mémoire vive 4 ; il reforme également les signaux de sortie de cette mémoire (borne O) pour les appliquer au dispositif multiplexeur 15. La constitution de ce circuit 5 est étroitement dépendante du type de mémoire 4 qui est choisie. Cette mémoire 4 doit avoir un temps d'accès nettement inférieur à la période de l'horloge de synchronisation (1,2 µs) reçue sur l'entrée du circuit 5.

Le circuit 5 est ici décrit pour être relié à une mémoire vive 4 de type MOSTEK 4104 (4096 x 1) de temps d'accès voisin de 300 ns, soit 1/4 de la période de l'horloge de synchronisation ou une mémoire analogue.

Sur la figure 6 sont représentés les chronogrammes des impulsions numériques inscrites et lues dans la mémoire vive 4 lorsque le compteur 2 décrit les derniers cycles avant le débordement. Les références a à k sur cette figure 6 représentent des chronogrammes, respectivement :

a : de l'horloge commandée par le dispositif 6 qui active le compteur 2 ;

b : de la sortie Q2 du 3ème étage du compteur 2 (horloge 1,2 µs) ;

c : de la sortie De de débordement du compteur 2 ;

d : de la sortie Q3 du 4ème étage du compteur 2 et du poids le plus faible AO de l'adressage mémoire ;

e et i : du signal de sélection $\overline{CE}$ de la mémoire 4 fourni par le circuit 5 en mode écriture (e,f,g), ce signal est envoyé également sur l'entrée $\overline{WE}$ de la mémoire 4, tandis qu'en mode lecture (h,i,j) cette entrée reste au niveau logique haut (h); ce signal est décalé d'un 1/2 pas de l'horloge à 6,47 MHz par rapport au signal b ;

f : des impulsions vidéo reçues et remises en forme ;

g : des mêmes impulsions (f) resynchronisées par le signal b ;

h : de la sortie Q (au niveau haut) de la bascule 37 du circuit 5 en mode lecture de la mémoire 4 ;

j : du signal de sortie de la mémoire 4 pendant les cycles de lecture, qui passe au niveau 1 ou au niveau 0 après un temps égal au temps d'accès de la mémoire 4 après chaque front descendant du signal i, et qui retourne en niveau flottant (haute impédance) après chaque front montant du signal i ;

k : des impulsions de sortie resynchronisées, en sortie Q du circuit 5, selon qu'un élément binaire 0 ou 1 est inscrit dans la case mémoire.

Ces impulsions sont transmises à l'entrée du multiplexeur 15 par l'intermédiaire de la porte ET 18.

Les chronogrammes d, e, f, f de la figure 6 montrent le fonctionnement du circuit 5 de synchronisation et de la mémoire 4 au cours du cycle d'écriture du premier cycle de recherche des impulsions codées émises par le transpondeur tandis que les chronogrammes h, i, j, k sont relatifs au cycle de lecture au cours du deuxième cycle de recherche.

La figure 7 représente en détail le circuit de décodage 14 destiné à décoder la deuxième impulsion d'une paire d'impulsions codées provenant du transpondeur au sol. Les arrivées des impulsions émises par ce dernier sont, selon le mode choisi X ou Y, détectées par le récepteur de bord. La commande de mode X aboutit à une première entrée d'un mono-

0027081

stable 40 de 10 µs et celle de mode Y à une première entrée d'un monostable 41 de 28 µs, tous les deux d'un type approprié, par exemple du
type 54 LS 221.

Les secondes entrées de ces monostables 40 et 41 sont reliées à la
sortie du générateur 12 de créneaux dont la retombée active l'un ou
l'autre des monostables selon le mode X ou Y et leurs sorties sont
connectées respectivement aux entrées d'une porte OU 42. La porte OU 42
fournit un signal de niveau 1 à l'entrée d'un monostable 43 de 4 µs
lorsqu'elle reçoit sur l'une de ces deux entrées un signal correspondant
d'un des monostables 40 ou 41.

La sortie du monostable 43 de 4 µs est reliée à une première entrée
d'une porte ET-NON 44 dont la seconde entrée est connectée à la sortie
du dispositif de multiplexage 15. Le niveau logique à la sortie de cette
porte ET-NON 44 est appliquée à l'entrée du registre tampon 11.

La figure 8 représente à titre d'exemple en mode X les impulsions
numériques à un instant donné du fonctionnement du circuit 14 de décodage (figure 7) aux points de liaison suivants indiqués par les références :

a : impulsions reçues IR en mode X
b : en sortie du générateur de créneaux 12 ;
c : en sortie du dispositif de multiplexage 15 ;
d : en sortie de la porte OU 42 ;
e : en sortie Q du monostable 43 ;
f : en sortie de la porte ET-NON 44.

La figure 9 représente le schéma électrique du dispositif 6 de
commande de l'horloge de comptage. Il comporte deux portes ET-NON 45
et 46 couplées chacune par une entrée à la sortie de l'autre. Une seconde
entrée de la porte ET-NON 45 peut recevoir par la sortie de débordement
du compteur 2 un ordre d'arrêt de comptage.

La seconde porte ET-NON 46 rétrocouplée comporte également une
seconde entrée sur laquelle elle peut recevoir un ordre de départ de
comptage émis par le diviseur 7 programmable.

Le signal de sortie de la porte ET-NON 46 de plus est envoyé à
l'entrée D d'une bascule 47 de type D comprenant d'autre part une
entrée CK recevant le complément $\overline{H}$ de l'horloge à quartz 3.

La bascule 47 fournit sur la sortie complémentaire $\overline{Q}$ un signal
d'autorisation de comptage à une entrée du circuit de synchronisation 5
et également à une entrée d'une porte OU-NON 48 reliée par une seconde entrée à l'horloge 3 qui lui distribue le pas d'horloge H.

Dans ces conditions, la sortie de la porte OU-NON 48 fournit le pas d'horloge 6,47 MHz resynchronisé à la fois à l'entrée CK du compteur 2 et au circuit de synchronisation 5. On utilise des portes ET-NON 45 et 46, OU-NON 48 et une bascule 47 en logique bipolaire de type LS de manière à avoir des temps de commutation faibles devant la période d'horloge (154 ns).

La figure 10 représente des chronogrammes des impulsions numériques échangées par le dispositif 6 de commande de l'horloge de comptage pendant la partie active du cycle de mesure de 5,1 ms :

la référence a montre celui de la sortie H de l'horloge à 6,47 MHz et la référence b son complément $\overline{H}$ ;

la référence c montre celui de l'ordre de départ du comptage en provenance du diviseur programmable 7 ;

la référence d montre celui de la sortie $\overline{Q}$ de la bascule 47 ;

la référence e montre celui de la sortie de la porte OU-NON 48 ;

la référence f montre celui de la sortie de débordement du compteur 2 en fin de comptage.

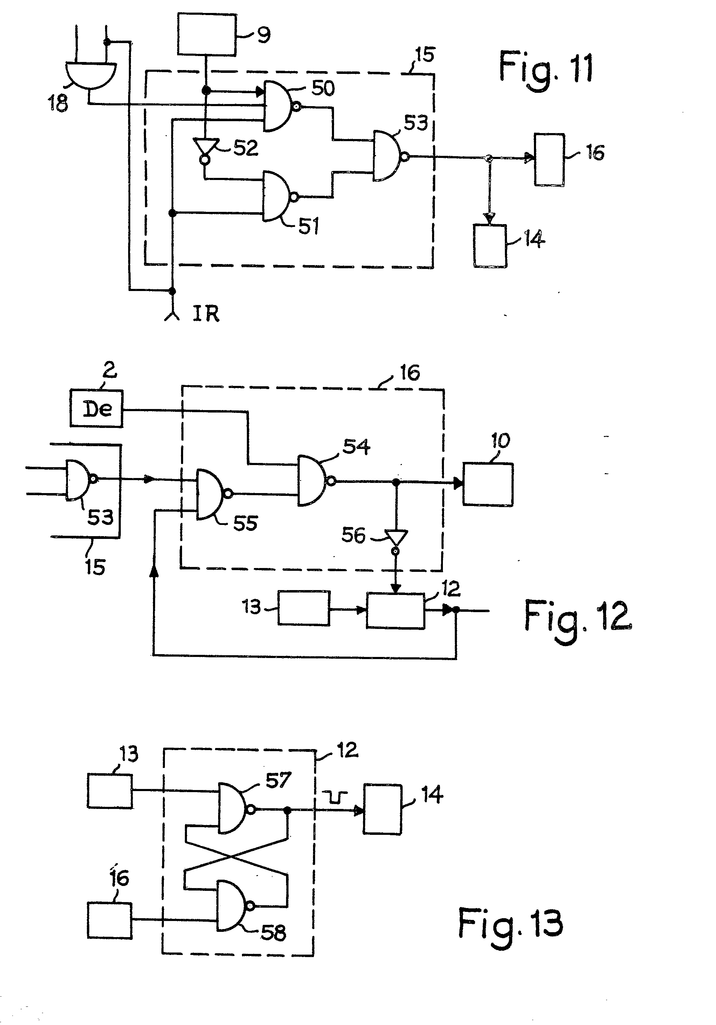

La figure 11 représente le schéma électrique du dispositif de multiplexage 15. Ce dispositif 15 est constitué par une porte ET-NON 50 à trois entrées. La première entrée est reliée à une sortie du circuit d'entrée et de sortie 9 de l'unité de calcul 1 qui le commande pendant le 1er cycle de recherche ou les cycles de poursuite (état logique 0) et le 2ème cycle de recherche (état logique 1). La deuxième entrée est reliée à la sortie de la porte ET 18 et elle reçoit de celui-ci les signaux k (figure 6) resynchronisés du circuit de synchronisation 5 quand se présentent à sa troisième entrée des impulsions vidéo IR transmises par le récepteur de bord de l'aéronef.

Une deuxième porte ET-NON 51 reçoit également sur une première entrée les impulsions IR vidéo et sa seconde entrée est reliée par l'intermédiaire d'un inverseur 52 à la sortie du circuit d'entrée-sortie 9.

La sortie de la porte ET-NON 50 est connectée à une entrée d'une troisième porte ET-NON 53 qui possède une autre entrée reliée à la sortie de la porte ET-NON 51. La porte ET-NON 53 fournit à sa sortie vers le dispositif à coïncidence 16 et le circuit de décodage 14 soit les impulsions vidéo au cours du cycle de recherche ou de poursuite, soit les impulsions reçues validées par le signal de sortie k (figure 6) du circuit 5 de synchronisation, c'est-à-dire enregistrées au cycle de mesure précédent dans la mémoire 4.

La figure 12 représente le schéma électrique du dispositif à coïncidence 16. Il comprend une première porte ET-NON 54 reliée par une première entrée à la sortie De de débordement du compteur 2, et d'autre part une seconde porte ET-NON 55 dont la sortie est reliée à la seconde entrée de la première porte ET-NON 54. Cette seconde porte ET-NON 55 est également reliée par une première entrée à la sortie de la porte ET-NON 53 du dispositif de multiplexage 15 et par une seconde entrée à la sortie du générateur de créneaux 12.

La première porte ET-NON 54 fournit sur sa sortie un ordre pour transférer les informations contenues dans le registre tampon 11 au registre tampon 10 et également, dans le cas du transfert, un ordre d'arrêt à une entrée du générateur de créneaux 12 par l'intermédiaire d'un inverseur 56.

Ce générateur de créneaux 12 peut être constitué par exemple par deux portes ET-NON 57 et 58 rétrocouplées, comme il est montré à la figure 13.

Le registre de tampon 10 est de préférence constitué par quatre circuits comportant chacun quatre bascules D commercialisées sous le type 74LS173. Le registre tampon 11 est par exemple constitué par un circuit commercialisé du type 54LS173.

Le comparateur numérique 13 est de préférence constitué par quatre circuits du genre TTL-LS, commercialisés sous le type 74LS85, connectés en cascade. Comme unité de calcul 1 programmable on peut par exemple utiliser un microprocesseur 8 ebs tels ceux commercialisés sous les noms 8080A, ou F8, ou 6800.

L'asservissement du créneau par le circuit de décodage sur la réponse est obtenu en utilisant une loi de calcul appropriée. Par exemple, si on désire un asservissement à erreur nulle pour un aéronef se déplaçant à vitesse constante, une loi de calcul dite du deuxième ordre où entrent la vitesse et l'erreur à chaque mesure convient.

Une telle loi peut s'écrire :

si n est le nième pas de calcul et n-1 le pas précédent

$$\text{Erreur}_n = \text{distance mesurée}_n - \text{distance calculée}_{n-1}$$

$$\text{Vitesse}_n = \text{vitesse}_{n-1} + K3 \; \text{erreur}_n$$

$$\text{Distance calculée}_n = \text{distance calculée}_{n-1} + K_1 \; \text{erreur}_n + K_2 \; \text{vitesse}_n.$$

L'erreur au pas de calcul n, la vitesse calculée au pas n-1 et la

20     0027081

distance calculée au pas n-1 permettent de calculer la vitesse au pas de calcul n et la distance au pas de calcul n. Les coefficients K1, K2, K3 permettent de régler les caractéristiques d'amortissement et de temps d'acquisition de l'asservissement et de filtrer le bruit superposé aux impulsions qui se traduit par des fluctuations rapides de leur position temporelle.

La position du créneau d'encadrement des réponses est calculée par l'unité 1 à partir de la valeur de la distance calculée$_n$, à chaque pas de calcul. Si on désire une tolérance de ± 2 µs sur la détermination du synchronisme de la réponse, le créneau sera activé 2 µs avant l'instant calculé pour la réception de celle-ci.

Le créneau ainsi activé ne retombe que lorsqu'une impulsion est reçue. La valeur correspondante de l'échelle de comptage est enregistrée dans le registre 10. L'unité de calcul 1 doit contrôler si la valeur enregistrée correspond bien à la réponse, c'est-à-dire si la tolérance admise pour l'instant présumé de la réception est respectée. Par exemple, si la tolérance admise est de ± 2 µs, la valeur enregistrée doit être située à ± 2 µs de l'instant prévu pour la réception. Dans le cas contraire, la valeur enregistrée n'est pas utilisée pour le calcul précédent et celui-ci est effectué en admettant que l'erreur est nulle pour le pas de calcul correspondant. Ce cas se produit assez souvent dans les systèmes TACAN et DME où la réponse à une interrogation n'est reçue que dans 70 à 90% des cas.

L'avantage de l'utilisation d'une unité de calcul est de permettre l'adaptation facile des caractéristiques de l'asservissement aux caractéristiques de l'aéronef, en particulier à sa vitesse d'évolution, et d'adapter le filtrage des impulsions reçues à la qualité du signal de sortie du récepteur. Il est possible de réduire la tolérance admise pour le synchronisme des impulsions reçues et de modifier les coefficients caractéristiques du calcul de manière à obtenir une information distance calculée de plus en plus exempte de bruit, au fur et à mesure que l'asservissement est obtenu. Ceci n'est pas possible sans augmentation de complexité avec des circuits où le système de mesure n'est pas reliée à une telle unité de calcul.

L'acquisition de la distance de l'aéronef par rapport à plusieurs transpondeurs peut être obtenue avec le même système de mesure, à condition d'effectuer les commutations adaptées de fréquences d'émission et de réception de l'équipement de bord. L'unité de calcul peut alors être utilisée pour effectuer le calcul de la position de l'aéronef à partir de trois distances.

L'unité de calcul peut également traiter la détermination du relèvement de l'aéronef dans le cas de réception des impulsions émises par des transpondeurs TACAN.A partir de deux distances et d'un relèvement qui n'a pas besoin d'être précis, il est possible de déterminer la position de l'aéronef.

REVENDICATIONS

1. Equipement de mesure de distance du type DME fournissant la distance d'un aéronef par rapport à une balise de radionavigation, et comportant un circuit de recherche et un circuit de poursuite des paires d'impulsions de réponse codées émises par le répondeur de la balise, et reçues par un récepteur aéroporté associé à cet équipement, et qui sont synchrones de paires d'impulsions d'interrogation codées émises par un émetteur aéroporté associé à cet équipement, dans lequel le circuit de recherche détecte les temps d'arrivée de toutes les impulsions reçues à l'aide d'un compteur numérique et les enregistrent dans une mémoire, le circuit de poursuite détermine à chaque instant la position temporelle des impulsions de réponse synchrones, équipement caractérisé en ce que le circuit de recherche mesure lors d'un premier cycle de recherche les temps d'arrivée de toutes les impulsions qui sont enregistrées dans une mémoire vive, en ce que le compteur numérique est déclenché avec un temps de retard donné par rapport au temps d'émission des impulsions d'interrogation, par l'intermédiaire d'un diviseur programmable activant un dispositif de commande d'une horloge à quartz, ce diviseur étant commandé par transfert de mots numériques contenus dans un premier registre tampon et délivrés à ce dernier par un circuit de calcul de type programmable, en ce que dans une second cycle de recherche, la mémoire est lue après remise à zéro du compteur avec un décalage correspondant au temps de retard donné plus le temps de codage entre les deux impulsions d'une paire d'impulsions de réponse codées selon les codes X ou Y des systèmes de radionavigation DME ou TACAN, les impulsions enregistrées en mémoire étant lues et les impulsions reçues étant présentées à l'entrée d'une porte ET qui délivre en cas de coïncidence un signal au circuit de poursuite pour qu'il valide le transfert du temps de coïncidence dans un deuxième registre tampon comme temps d'arrivée d'une première impulsion de réponse synchrone du répondeur.

2. Equipement selon la revendication 1, caractérisé en ce que pour déterminer l'arrivée d'une paire d'impulsions de réponse synchrones le circuit de poursuite est composé : d'un générateur de créneaux élaborant un créneau Δ μs avant l'instant présumé d'arrivée de la première impulsion d'une paire codée de réponse suivante, ce générateur étant activé par la sortie de mots égaux d'un comparateur numérique relié aux entrées parallèles du compteur numérique et à une partie du premier registre tampon dans lequel le circuit de calcul programmable inscrit un mot numérique correspondant au temps présumé de l'arrivée de la première impulsion d'une paire d'impulsions codées de réponse du répondeur, moins le temps Δ μs, le créneau retombant à l'arrivée de ladite première impulsion.

3. Equipement selon les revendications 1 et 2, caractérisé en ce que pour déterminer l'arrivée d'une seconde impulsion d'une paire d'impulsions de réponse du répondeur son circuit de poursuite se compose d'un circuit de décodage comportant une première entrée reliée à une commande de canal X, une seconde entrée à une commande du canal Y, servant à afficher le code DME ou TACAN, une troisième entrée reliée à la sortie du générateur de créneaux qui déclenche, après retombée de son créneau à l'arrivée de ladite première impulsion de réponse, l'activation d'un autre créneau par le circuit de décodage, créneau espacé par rapport au créneau précédent et de largeur correspondant au code affiché sur la commande du canal (X ou Y) choisi, une quatrième entrée reliée à la sortie d'un dispositif de multiplexage qui lui délivre les impulsions reçues au récepteur associé et remises en forme, ce circuit de décodage délivrant à l'arrivée de la deuxième impulsion d'une paire d'impulsions synchrones de réponse une impulsion numérique qui est enregistrée dans un troisième registre tampon.

4. Equipement selon l'une quelconque des revendications 2 et 3, caractérisé en ce que le circuit de poursuite comprend un dispositif de coïncidence autorisant le transfert du contenu du compteur numérique dans le deuxième registre tampon lorsque la deuxième impulsion d'une paire d'impulsions synchrones de réponse a été stockée dans ledit troisième registre tampon, ce deuxième registre tampon stockant successivement les temps d'arrivée des paires d'impulsions codées synchrones à partir desquels ledit circuit de calcul programmable élabore la distance recherchée entre l'aéronef et la balise.

5. Equipement selon la revendication 1, caractérisé en ce que la synchronisation de la mémoire vive est commandée par un circuit de synchronisation comprenant : une première bascule de type D ayant : une première entrée CL reliée à la sortie d'un inverseur dont l'entrée reçoit le signal d'autorisation de comptage délivré par le dispositif de commande de l'horloge de comptage, une seconde entrée CK reliée également par un autre inverseur à la sortie du dispositif de commande de l'horloge à quartz, une troisième entrée reliée à une sortie Q2 du compteur, la sortie Q de la bascule fournissant une impulsion de vali-

24 0027081

dation $\overline{CE}$ à une entrée correspondante de la case mémoire vive à chaque lecture ou à chaque écriture dans cette case, l'impulsion $\overline{CE}$ étant également reçue à une première entrée d'une première porte ET-NON comportant une seconde entrée recevant un signal de mode de lecture ou d'écriture en mémoire vive provenant d'un circuit d'entrée-sortie du circuit de calcul, signal également transmis à un troisième inverseur relié à la première entrée d'une deuxième porte ET-NON dont la seconde entrée est au niveau logique 1, et dont la sortie est reliée à une première entrée d'une troisième porte ET-NON et la sortie de la première porte ET-NON à la seconde entrée de cette troisième porte ET-NON, de façon à fournir, en sortie de cette dernière porte un signal d'écriture ou de lecture $\overline{WE}$ à une entrée correspondante de la mémoire, en ce que le circuit comporte en outre une seconde bascule de type D avec une entrée CK reliée à la sortie Q2 du compteur numérique, une entrée D reliée à la sortie 0 des données de la mémoire vive et une sortie Q reliée à une entrée de ladite porte ET dont la sortie est reliée au dispositif de multiplexage, et en ce que les impulsions de réponse émises par le transpondeur sont reçues à une autre entrée R et sont transmises directement à l'entrée I des données de la mémoire vive.

6. Equipement selon la revendication 3, caractérisé en ce que le circuit de décodage de la seconde impulsion d'une paire d'impulsions codées synchrones comprend : une première et une deuxième bascules monostables de durées respectives de 10 µs et 28 µs, reliées, la première par sa première entrée au canal de commande X, la deuxième par sa première entrée au canal de commande Y, et leurs secondes entrées à la sortie dudit générateur de créneaux, leurs sorties étant connectées aux entrées d'une porte OU qui fournit un signal de niveau 1 à l'entrée d'un troisième monostable d'une durée de 4 µs, quand l'un des canaux de commande est au niveau 1 ; une porte ET-NON reliée par une première entrée à la sortie de la troisième bascule monostable et par une seconde entrée à la sortie dudit dispositif de multiplexage, et sa sortie reliée à l'entrée du troisième registre tampon.

7. Equipement selon la revendication 3, caractérisé en ce que le dispositif de multiplexage comprend un opérateur ET-NON ayant une première entrée reliée à une sortie du circuit d'entrée et de sortie de l'unité de calcul qui le commande pendant le premier cycle de recherche ou les cycles de poursuite (état logique 0) et le deuxième cycle de recherche (état logique 1), une deuxième entrée reliée à la sortie de ladite porte ET recevant de celle-ci les signaux resynchronisés du circuit de synchronisation tandis que se présentent à sa troisième entrée des impulsions vidéo transmises par le récepteur de bord de l'aéronef, en ce qu'une deuxième porte ET-NON reçoit également sur une première entrée les impulsions vidéo tandis que sa seconde entrée est reliée par l'intermédiaire d'un inverseur à la sortie du circuit d'entrée-sortie du circuit de calcul, la sortie de la première porte ET-NON étant connectée à une entrée d'une troisième porte ET-NON qui possède une entrée reliée à la sortie de la deuxième porte ET-NON, la troisième porte ET-NON fournissant à sa sortie vers le dispositif à coïncidence et le circuit de décodage, soit les impulsions vidéo au cours du cycle de recherche ou de poursuite, soit les impulsions reçues validées par le signal de sortie du circuit de synchronisation, c'est-à-dire enregistrées au cycle de mesure précédent dans la mémoire vive.

8. Equipement selon la revendication 4, caractérisé en ce que le dispositif à coïncidence comprend : une première porte ET-NON reliée par une première entrée à la sortie de débordement du compteur numérique, et d'autre part une seconde porte ET-NON dont la sortie est reliée à la seconde entrée de la seconde porte ET-NON, cette seconde porte ET-NON étant également reliée par une première entrée à la sortie de la troisième porte ET-NON du dispositif de multiplexage et par une seconde entrée à la sortie du générateur de créneaux.

9. Equipement selon la revendication 1, caractérisé en ce que le dispositif de commande de l'horloge de comptage comporte une première et une seconde portes ET-NON couplées chacune par une entrée à la sortie de l'autre, une seconde entrée de la première porte ET-NON recevant de la sortie de débordement du compteur numérique un ordre d'arrêt de comptage, la seconde porte ET-NON comportant également une seconde entrée sur laquelle elle peut recevoir un ordre de départ de comptage émis par le diviseur programmable, le signal de sortie de la seconde porte ET-NON étant de plus délivré à l'entrée d'une bascule de type D comprenant d'autre part une entrée CK recevant le complément $\overline{H}$ de l'horloge à quartz, cette bascule fournissant sur sa sortie complémentaire $\overline{Q}$ un signal d'autorisation de comptage à une entrée du circuit de synchronisation et également à une entrée d'une porte OU-NON reliée par une seconde entrée à l'horloge à quartz qui lui distribue le pas d'horloge H, en ce que la sortie de la porte OU-NON fournit le pas d'horloge resynchronisé à la fois à l'entrée CK du compteur numérique et au circuit de synchronisation.

Fig.1

0027081

Fig.2

Fig.3

Fig.4

4/8

0027081

5/8

0027081

Fig.5

Fig.7

Fig.6

Fig.8

Fig.9

Fig.10

0027081

Fig. 11

Fig. 12

Fig. 13

**0027081**

Numéro de la demande

Office européen
des brevets

**RAPPORT DE RECHERCHE EUROPEENNE**

EP 80 40 1398

| | **DOCUMENTS CONSIDERES COMME PERTINENTS** | | **CLASSEMENT DE LA DEMANDE (Int. Cl. 3)** |
|---|---|---|---|
| Catégorie | Citation du document avec indication, en cas de besoin, des parties pertinentes | Revendication concernée | |
| | US - A - 3 983 557 (R.L. POWELL et al.)<br><br>* Colonne 2, lignes 21-64 et colonne 3, ligne 8 - colonne 4, ligne 2; figure 1 *<br><br>-- | 1,4 | G 01 S 13/78 |
| | FR - A - 2 238 292 (SPERRY RAND)<br><br>* Page 4, lignes 5-35; page 7, ligne 7 - page 9, ligne 28 et figures 1 et 2 *<br><br>-- | 1 | |
| | US - A - 3 781 888 (J.W. BAIL)<br><br>* Colonne 4, ligne 53 - colonne 7, ligne 3 et figures 1 et 2 *<br><br>---- | 1 | **DOMAINES TECHNIQUES RECHERCHES (Int. Cl. 3)**<br><br>G 01 S 13 |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 15-01-1981 | MARCHAU |

OEB Form 1503.1  06.78